# DEMANDE DE BREVET EUROPEEN

(11) **EP 4 209 370 A1**
(43) Date de publication de la demande: **12.07.2023**
(21) Numéro de dépôt: 22215688.7
(22) Date de dépôt: 21.12.2022
(51) Int. Cl.: B60K 1/02, F16H 37/06, B60K 1/00, B60K 17/02, F16H 1/22, F16H 3/089, F16H 3/08, B60K 11/02, B60K 17/22

(54) **SYSTEME DE PROPULSION POUR VEHICULE ELECTRIQUE**

(30) Priorité: 08.01.2022 FR 2200123
(71) Demandeur: VALEO EMBRAYAGES, 80009 Amiens (FR)
(72) Inventeur: VASSIEUX, Loic, 95892 CERGY PONTOISE (FR); LHEUREUX, Dominique, 95892 CERGY PONTOISE (FR); LEMAIRE, Thibault, 95892 CERGY PONTOISE (FR); AUFFRAY, Benoist, 95892 CERGY PONTOISE (FR); DERVILLE HELLUIN, Clément, 95892 CERGY PONTOISE (FR)
(74) Mandataire: Valeo Powertrain Systems

(57) **Abrégé**

Système de propulsion (1) pour véhicule électrique, comprenant :
- un ensemble de quatre machines électriques de propulsion (2) comprenant chacune un stator et un rotor présentant un arbre de sortie mobile en rotation autour d'un axe ;
- une roue dentée commune (11) liée cinématiquement aux n arbres de sortie et apte à recevoir le couple fourni par les machines électriques (2) de sorte à former un premier réducteur de vitesse,
- des roues dentées primaires aptes à être entraînées par la roue dentée commune (11),
- un arbre intermédiaire (12) apte à être entraîné par des roues dentées intermédiaires, chaque roue dentée primaire étant liée cinématiquement à une roue dentée intermédiaire correspondante de sorte à former un couple d'engrenage auquel est associé un deuxième réducteur de vitesse,
- un arbre secondaire (13) apte à entraîner le véhicule et présentant une roue dentée secondaire liée cinématiquement à l'arbre intermédiaire (12) de sorte à former un troisième réducteur de vitesse.

## Description

### DOMAINE TECHNIQUE DE L'INVENTION

L'invention se rapporte à un système de propulsion pour véhicule électrique. Ce système de propulsion comprend notamment plusieurs machines électriques fournissant un couple moteur, une succession de trains d'engrenage et des systèmes de couplage sélectif distincts capables de fournir plusieurs rapports de réduction de vitesse et plusieurs modes de fonctionnement distincts à l'utilisateur du véhicule.

Un tel véhicule est à propulsion purement électrique, étant dépourvu de moteur thermique de propulsion. Le véhicule électrique peut être un véhicule automobile ou un véhicule industriel, tel qu'un poids lourd, un autobus ou un tracteur.

### ÉTAT DE LA TECHNIQUE ANTÉRIEURE

On connaît par exemple un tel système de propulsion de la demande de brevet WO17080571 A1. Le système de propulsion selon cette demande de brevet comporte une première machine électrique et une deuxième machine électrique, une transmission agencée pour transmettre un couple desdites machines électriques à une paire de roues entraînées d'un véhicule. La première machine électrique est reliée en entraînement à un premier arbre d'entrée de la transmission et la deuxième machine électrique est reliée en entraînement à un second arbre d'entrée de la transmission. Ce système de propulsion se distingue par un premier trajet de couple, qui permet de transmettre un couple, comprenant un seul rapport de transmission entre le premier arbre d'entrée et un arbre de sortie de la transmission, et par un second trajet de couple, qui permet de transmettre un couple, comprenant deux rapports de transmission sélectionnables et pouvant venir séparément en prise entre le second arbre d'entrée et ledit arbre de sortie de la transmission, les trois rapports de transmission des premier et second trajets de couple étant différents les uns des autres.

Un tel système de propulsion est contraignant du fait que les machines électriques ne puissent pas fonctionner selon un même régime de fonctionnement car étant située sur deux trajet de couple distincts, ce qui rend complexe le pilotage des machines électriques.

Il existe un besoin pour améliorer encore les systèmes de propulsion pour véhicule électrique comprenant plusieurs moteurs électriques et à plusieurs rapports de réduction de vitesses.

### EXPOSÉ DE L'INVENTION

L'invention vise à répondre à ce besoin et elle y parvient, selon l'un de ses aspects, à l'aide d'un système de propulsion pour véhicule électrique, comprenant :
- un ensemble de n machines électriques de propulsion, n étant un nombre entier supérieur ou égal à 3, chaque machine électrique comprenant un stator et un rotor présentant un arbre de sortie mobile en rotation autour d'un axe ;
- une roue dentée commune liée cinématiquement aux n arbres de sortie et apte à recevoir le couple moteur fourni par les n machines électriques, les n machines électriques étant réparties angulairement autour de la roue dentée commune de sorte à former un premier réducteur de vitesse,
le système de propulsion comprenant :
- des roues dentées primaires aptes à être entraînées par la roue dentée commune ;
- un arbre intermédiaire apte à être entraîné par des roues dentées intermédiaires, chaque roue dentée primaire étant liée cinématiquement à une roue dentée intermédiaire correspondante de sorte à former un couple d'engrenage auquel est associé un deuxième réducteur de vitesse ;
- un arbre secondaire apte à entraîner un ensemble d'une ou plusieurs roues motrices du véhicule et présentant une roue dentée secondaire liée cinématiquement à l'arbre intermédiaire de sorte à former un troisième réducteur de vitesse ;
dans lequel un premier système de couplage sélectif, disposé entre la roue dentée commune et les roues dentées primaires ou alternativement entre l'arbre intermédiaire et les roues dentées intermédiaire, sélectionne un premier couple d'engrenage ou un deuxième couple d'engrenage depuis une position neutre.

La répartition angulaire des n machines électriques autour de la roue dentée commune permet d'implanter le système de propulsion dans un encombrement plus restreint, axialement parlant.

Plus précisément, l'arbre secondaire peut présenter une roue dentée secondaire liée cinématiquement à l'arbre intermédiaire par l'intermédiaire d'une roue dentée intermédiaire, de sorte à former un troisième réducteur de vitesse. Par exemple, cette roue dentée intermédiaire est distincte de celles associées au deuxième réducteur de vitesse. L'arbre secondaire peut présenter par exemple trois roues dentées intermédiaires alignées axialement.

De préférence, les n machines électriques sont similaires, par exemple des machines électriques synchrones à aimants ou à rotor bobiné. En variante, il peut s'agir de machines asynchrones, par exemple. L'utilisation de plusieurs machines électriques similaires permet de réduire les coûts de production et de faciliter le pilotage des machines électriques.

Au sens de la présente demande :
- un système de couplage entre deux pièces est sélectif lorsqu'il permet de coupler ou de découpler les deux pièces selon la consigne reçue,
- un système de couplage entre deux pièces qui n'est pas sélectif couple en permanence ces deux pièces,
- deux pièces couplées par l'un des systèmes de couplage précités sont solidaires en rotation. Cette solidarisation peut correspondre à un verrouillage de couple dans le cas où le système de couplage met en oeuvre un crabot et cette solidarisation peut mettre en oeuvre une transmission par frottement dans le cas où le système de couplage met en oeuvre un embrayage, et
- « en amont » et « aval » se définissent par rapport au sens de transfert du couple, depuis une machine électrique vers les roues du véhicule.

De préférence, l'arbre secondaire, à partir d'un couple moteur C0 transmis par les n machines électriques, peut être apte à recevoir sélectivement : un couple C1 ayant transité par le premier couple d'engrenage, ou un couple C2 ayant transité par le deuxième couple d'engrenage tel que C1 > C2.

Avantageusement, le premier ratio entre le couple moteur C0 et le couple C1 ayant transité par le premier couple d'engrenage peut être compris entre 10 et 15, tel que 10 < C0/C1 < 15 et le deuxième ratio entre le couple moteur C0 et le couple C2 ayant transité par le deuxième couple d'engrenage peut être compris entre 5 et 10, tel que 5 < C0/C2 < 10.

De préférence, les n machines électriques peuvent être réparties de manière régulière autour de l'axe de rotation de la roue dentée commune selon un angle Δ égal à 360° / n.

Chaque machine électrique peut être configurée pour fonctionner de manière réversible, étant alors associée à une électronique tel qu'un onduleur /redresseur lui permettant alternativement : d'être alimentée en énergie électrique pour fournir un couple moteur, et de générer de l'énergie électrique sur la base d'un couple reçu sur son arbre lorsque le véhicule freine ou qu'il roule sur sa lancée, par exemple.

Chaque machine électrique est par exemple une machine électrique tournante.

Chaque machine électrique peut être configurée pour fonctionner de manière réversible, étant alors associée à une électronique tel qu'un onduleur /redresseur lui permettant alternativement : d'être alimentée en énergie électrique pour fournir un couple moteur, et de générer de l'énergie électrique sur la base d'un couple reçu sur son arbre lorsque le véhicule freine ou qu'il roule sur sa lancée, par exemple.

Les n machines électriques peuvent fournir une même puissance nominale mécanique, cette puissance étant par exemple comprise entre 50kW et 150kW, pouvant être égale à 120kW par exemple. L'emploi de machines électriques identiques peut permettre de réduire les coûts de production du système de propulsion, en réduisant le besoin en développements spécifiques d'une machine à l'autre et en augmentant les volumes.

Le système de propulsion peut comprendre un arbre de transmission équipé de cardans, reliant l'arbre secondaire à un différentiel. Ce différentiel peut être un différentiel mécanique ou un différentiel électronique pilotant le couple de sortie sur chaque roue motrice du véhicule. Notamment, le différentiel peut être disposé de manière à recevoir sélectivement : le couple C1 ayant transité par le premier couple d'engrenage, ou le couple C2 ayant transité par le deuxième couple d'engrenage tel que C1 > C2. Ce différentiel peut être associé à l'essieu arrière du véhicule. En variante, le différentiel peut être lié cinématiquement directement sur l'arbre secondaire. De cette manière, l'encombrement axial du système de propulsion peut être réduit.

De préférence, le système de propulsion peut comprendre un carter de transmission supportant les n machines électriques et la roue dentée commune à l'aide d'au moins un palier de guidage. Le carter de transmission supporte des contraintes mécaniques réparties plus uniformément du fait de la répartition angulaire des n machines électriques autour de la roue dentée commune.

Avantageusement, le carter de transmission peut comprendre un circuit de circulation de fluide cheminant entre les n machines électriques afin d'évacuer les calories émises lors de la transmission d'un couple.

De préférence, l'axe de rotation de la roue dentée commune, l'axe de l'arbre intermédiaire et l'axe de l'arbre secondaire peuvent être parallèles.

Avantageusement, l'arbre secondaire peut être entraîné par la roue dentée secondaire par un deuxième système de couplage sélectif. De cette manière, il est possible de déconnecter le système de propulsion des roues du véhicule. On sécurise de cette manière le système de propulsion et notamment les machines électriques.

De préférence, le deuxième moyen de couplage sélectif peut être réalisé sous la forme d'un crabot ou d'un synchroniseur.

Selon une première variante de réalisation de l'invention, le premier système de couplage sélectif disposé entre la roue dentée commune et les roues dentées primaires est réalisé sous la forme d'un crabot ou d'un synchroniseur.

Selon une deuxième variante de réalisation de l'invention, le premier système de couplage sélectif disposé entre la roue dentée commune et les roues dentées primaires est réalisé sous la forme d'un double embrayage, notamment d'un double embrayage humide.

De préférence, le double embrayage humide peut être d'une architecture de type radiale dans laquelle des premier et deuxième embrayages multidisques sont disposés radialement l'un au-dessus de l'autre, le double embrayage humide comprenant un boitier de transmission de couple commun aux premier et deuxième embrayages multidisques et solidaire en rotation de la roue dentée commune.

En variante, le double embrayage humide peut être d'une architecture de type axiale dans laquelle des premier et deuxième embrayages multidisques sont disposés axialement l'un à côté de l'autre, le double embrayage humide comprenant un boitier de transmission de couple commun aux premier et deuxième embrayages multidisques et solidaire en rotation de la roue dentée commune.

Avantageusement, la roue dentée commune peut entourer circonférentiellement le boitier de transmission de couple.

Avantageusement, le carter de transmission peut supporter directement le boitier de transmission de couple et alimenter en fluide les premier et deuxième embrayages multidisques.

Selon une troisième variante de réalisation de l'invention, le premier système de couplage sélectif disposé entre l'arbre intermédiaire et les roues dentées intermédiaires est réalisé sous la forme d'un crabot ou d'un synchroniseur.

Dans tout ce qui précède, lorsque le système de propulsion comprend le premier et le deuxième systèmes de couplage sélectif, ce système de propulsion peut aussi comprendre un organe de pilotage des premier et deuxième systèmes de couplage sélectif de manière à ce que le système de propulsion puisse prendre tout ou partie des configurations suivantes :
- une configuration selon laquelle l'arbre secondaire reçoit un couple C1 transitant par le premier couple d'engrenage, le premier système de couplage sélectif étant dans une première position de couplage et le deuxième système de couplage sélectif étant en position de couplage,
- une configuration selon laquelle l'arbre secondaire reçoit un couple C2 transitant par le deuxième couple d'engrenage, le premier système de couplage sélectif étant dans une deuxième position de couplage différente de la première position et le deuxième système de couplage sélectif étant en position de couplage, et
- une configuration de maintenance dans laquelle les premier et deuxième systèmes de couplage sont en position neutre de découplage.

L'organe de pilotage peut être, par exemple, intégré au calculateur du véhicule (ECU en anglais). En variante, l'organe de pilotage peut être intégré à l'unité de contrôle de la transmission (TCU en anglais). En variante encore, l'organe de pilotage peut être modulaire et le module de pilotage du premier système de couplage est intégré à l'unité de contrôle de la transmission tandis que le module de pilotage du deuxième système de couplage est intégré au calculateur du véhicule.

### BRÈVE DESCRIPTION DES FIGURES

D'autres caractéristiques et avantages de l'invention ressortiront à la lecture de la description qui suit, en référence aux figures annexées.
[Fig. 1] La figure 1 est vue en élévation d'un système de propulsion pour véhicule électrique selon un premier exemple de mise en oeuvre de l'invention,
[Fig. 2] La figure 2 est une vue isométrique partielle du système de propulsion de la figure 1,
[Fig. 3] La figure 3 représente un système de propulsion selon un deuxième exemple de mise en oeuvre de l'invention,
[Fig. 4] La figure 4 représente un système de propulsion selon un troisième exemple de mise en oeuvre de l'invention.
[Fig. 5] La figure 5 représente un système de propulsion selon un quatrième exemple de mise en oeuvre de l'invention.
Pour plus de clarté, les éléments identiques ou similaires sont repérés par des signes de référence identiques sur l'ensemble des figures.

### DESCRIPTION DÉTAILLÉE DE MODES DE RÉALISATION

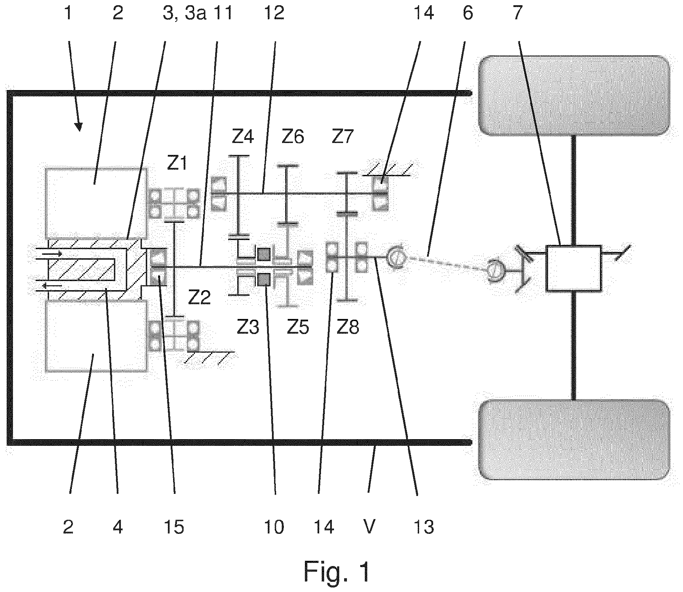

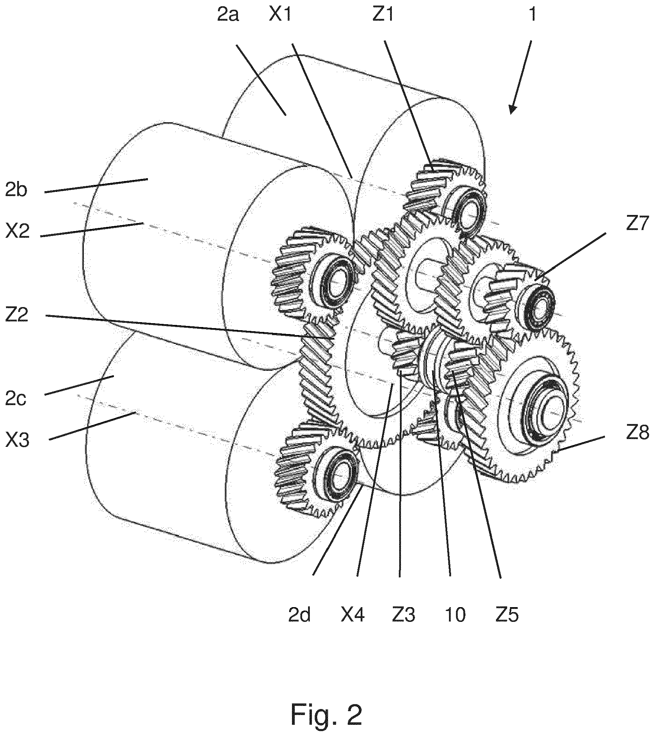

On a représenté sur les figures 1 et 2 un système de propulsion 1 de véhicule électrique V selon un premier exemple de mise en oeuvre de l'invention.

Ce système de propulsion 1 est ici purement électrique, c'est-à-dire qu'il n'utilise aucun moteur thermique pour entraîner le véhicule qui est ici un véhicule industriel, par exemple un poids lourd. Ce système de propulsion 1 comprend un ensemble de n machines électriques de propulsion 2, n étant un nombre entier supérieur ou égal à 3, chaque machine électrique comprenant un stator et un rotor présentant un arbre de sortie mobile en rotation autour d'un axe. Dans le premier exemple de mise en oeuvre de l'invention représenté sur les figures 1 et 2, l'ensemble comprend quatre machines électriques de propulsion 2a, 2b, 2c et 2d.

Les machines électriques tournantes 2a, 2b, 2c, 2d sont du même type et sont par exemple des machines synchrones à aimants permanents. Chaque machine électrique fournit une même puissance nominale mécanique, cette puissance étant par exemple de l'ordre 100kW. En variante, il peut s'agir de machines asynchrones, par exemple.

Comme on peut le voir sur la figure 2, la première machine électrique 2a présente dans l'exemple décrit un rotor avec un premier arbre de sortie tournant autour d'un premier axe de rotation X1, la deuxième machine électrique 2b présente un rotor avec un deuxième arbre de sortie tournant autour d'un deuxième axe de rotation X2, la troisième machine électrique 2c présente un rotor avec un troisième arbre de sortie tournant autour d'un troisième axe de rotation X3, et la quatrième machine électrique 2d présente un rotor ayant un quatrième arbre de sortie tournant autour d'un quatrième axe de rotation X4. Dans l'exemple décrit, les axes de rotation des machines électriques tournantes sont parallèles mais non confondus, les quatre machines électriques 2a, 2b, 2c, 2d n'ayant pas leurs axes de rotation alignés.

Les quatre machines électriques sont réparties de manière régulière autour de l'axe de rotation de la roue dentée commune selon un angle Δ égal à 90°.

Les arbres de sortie des quatre machines électriques engrènent simultanément sur une roue dentée commune 11 disposée à l'intérieur des axes X1, X2, X3 et X4. La roue dentée commune 11 est liée cinématiquement aux quatre arbres de sortie et reçoit le couple moteur C0 fourni par les quatre machines électriques, les quatre machines électriques étant réparties angulairement autour de la roue dentée commune de sorte à former un premier réducteur de vitesse Z1, Z2.

Un carter de transmission 3 supporte les quatre machines électriques et la roue dentée commune 11 à l'aide d'un palier de guidage 15. Le palier de guidage peut être un roulement à rouleaux ou un roulement à billes. Le carter de transmission 3 comprend notamment une âme centrale 3a située au centre des machines électriques. L'âme centrale 3a comprend un circuit de circulation de fluide 4 cheminant entre les quatre machines électriques afin d'évacuer les calories émises lors de la transmission d'un couple au sein du système de propulsion. Le fluide peut être de l'huile de refroidissement ou une solution aqueuse.

Le système de propulsion 1 comprend des roues dentées primaires Z3, Z5 aptes à être entraînées par la roue dentée commune au moyen d'un premier système de couplage sélectif 10. Le premier système de couplage sélectif 10 disposé entre la roue dentée commune 11 et les roues dentées primaires Z3, Z5 permet de sélectionner un premier couple d'engrenage Z3, Z4 ou un deuxième couple d'engrenage Z5, Z6 depuis une position neutre de découplage. Ce premier système de couplage sélectif 10 à trois positions est réalisé sous la forme d'un crabot. En variante, le premier système de couplage peut comprendre deux sous-ensembles de couplage, le premier étant associé uniquement au premier couple d'engrenage Z3, Z4 et le deuxième étant associé uniquement au deuxième couple d'engrenage Z5, Z6. En variante, le système de couplage peut être réalisé sous la forme d'un synchroniseur.

Le système de propulsion 1 comprend un arbre intermédiaire 12 apte à être entraîné par des roues dentées intermédiaires Z4, Z6 et Z7, chaque roue dentée primaire Z3, Z5 étant liée cinématiquement à une roue dentée intermédiaire Z4, Z6 correspondante de sorte à former un couple d'engrenage auquel est associé un deuxième réducteur de vitesse. L'arbre intermédiaire 12 est supporté en rotation par un boitier rattaché au carter de transmission 3 à l'aide de paliers de guidage 14.

Le système de propulsion 1 comprend également un arbre secondaire 13 apte à entraîner un ensemble d'une ou plusieurs roues motrices du véhicule. L'arbre secondaire 13 présente une roue dentée secondaire Z8 liée cinématiquement à l'arbre intermédiaire 12 par l'intermédiaire de la roue intermédiaire Z7, de sorte à former un troisième réducteur de vitesse Z7, Z8.

Dans ce premier exemple de mise en oeuvre de l'invention, l'axe de rotation 110 de la roue dentée commune 11, l'axe de rotation 120 de l'arbre intermédiaire 12 et l'axe de rotation 130 de l'arbre secondaire 13 sont parallèles.

En fonction de la configuration du premier système de couplage sélectif 10 permettant de sélectionner soit un premier couple d'engrenage Z3, Z4, soit un deuxième couple d'engrenage Z5, Z6, l'arbre secondaire 13 reçoit des valeurs de couple différentes. A partir d'un couple moteur C0 transmis par les quatre machines électriques, l'arbre secondaire reçoit sélectivement : le couple C1 ayant transité par le premier couple d'engrenage, ou le couple C2 ayant transité par le deuxième couple d'engrenage tel que C1 > C2.

Avantageusement, le premier ratio entre le couple moteur C0 et le couple C1 ayant transité par le premier couple d'engrenage Z3, Z4 peut être compris entre 10 et 15, tel que 10 < C0/C1 < 15 et le deuxième ratio entre le couple moteur C0 et le couple C2 ayant transité par le deuxième couple d'engrenage Z5, Z6 peut être compris entre 5 et 10, tel que 5 < C0/C2 < 10.

A titre indicatif, dans le cadre d'un véhicule industriel, le premier ratio peut être égal à 10,5 et le deuxième ratio peut être égal à 6.

Comme illustré sur la figure 1, un arbre de transmission 6 équipé de cardans, relie l'arbre secondaire 13 à un différentiel 7. Ce différentiel 7 peut être un différentiel mécanique ou un différentiel électronique pilotant le couple de sortie sur chaque roue motrice du véhicule. Notamment, le différentiel peut être disposé de manière à recevoir sélectivement : le couple C1 ayant transité par le premier couple d'engrenage Z3, Z4, ou le couple C2 ayant transité par le deuxième couple d'engrenage Z5, Z6.

On va maintenant décrire la phase transitoire de changement à un rapport de réduction de vitesse supérieur pour le système de propulsion 1.

Lors de la phase de roulage du véhicule électrique V comprise entre un instant t0 et t1, on considère que le premier rapport de réduction de vitesse est engagé et que le premier système de couplage sélectif 10 est dans une première position de couplage dans laquelle le premier couple d'engrenage Z3, Z4 est sélectionné.

Entre un instant t1 et t2, le système de propulsion passe de la position en prise vers la position neutre en désengageant le crabot 10. Le premier système de couplage sélectif 10 est désormais dans une position neutre de découplage. Pour préparer l'engagement du crabot 10 vers une deuxième position de couplage, on mesure la vitesse de rotation relative entre la roue dentée commune 11 et la roue dentée primaire Z5 par utilisation des différents capteurs de vitesse présents dans le système de propulsion 1. Dans cette phase, les machines électriques ne fournissent plus de couple.

Entre un instant t2 ett3, les machines électriques réversibles 2 sont activées pour ralentir la roue dentée commune 11 de manière à synchroniser les vitesses de rotation de la roue dentée commune 11 et de la roue dentée primaire Z5.

Entre un instant t3 et t4, le crabot 10 est engagé pour accoupler la roue dentée commune 11 à la roue dentée primaire Z5 associée lorsque leurs vitesses de rotation sont synchronisées. Le deuxième rapport de réduction de vitesse est engagé lorsque le premier système de couplage sélectif 10 est dans une deuxième position de couplage dans laquelle le deuxième couple d'engrenage Z5, Z6 est sélectionné.

Au-delà de l'instant t4, les machines électriques fournissent de nouveau du couple.

Grâce à l'utilisation de machines électriques réversibles 2, il est possible de réduire les temps de crabotage, sans avoir recours à un frein de boîte de vitesses.

On va maintenant décrire la phase transitoire de changement à un rapport de réduction de vitesse inférieur pour le système de propulsion 1.

Lors de la phase de roulage du véhicule électrique V comprise entre un instant t0 et t1, on considère que le deuxième rapport de réduction de vitesse est engagé et que le premier système de couplage sélectif 10 est dans une deuxième position de couplage dans laquelle le deuxième couple d'engrenage Z5, Z6 est sélectionné.

Entre un instant t1 et t2, le système de propulsion passe de la position en prise vers la position neutre en désengageant le crabot 10. Le premier système de couplage sélectif 10 est désormais dans une position neutre de découplage. Pour préparer l'engagement du crabot 10 vers une première position de couplage, on mesure la vitesse de rotation relative entre la roue dentée commune 11 et la roue dentée primaire Z3 par utilisation des différents capteurs de vitesse présents dans le système de propulsion. Dans cette phase, les machines électriques ne fournissent plus de couple.

Entre un instant t2 ett3, les machines électriques réversibles 2 sont activées pour accélérer la roue dentée commune 11 de manière à synchroniser les vitesses de rotation de la roue dentée commune 11 et de la roue dentée primaire Z3.

Entre un instant t3 et t4, le crabot 10 est engagé pour accoupler la roue dentée commune 11 à la roue dentée primaire Z3 associée lorsque leurs vitesses de rotation sont synchronisées. Le premier rapport de réduction de vitesse est engagé lorsque le premier système de couplage sélectif 10 est dans une première position de couplage dans laquelle le premier couple d'engrenage Z3, Z4 est sélectionné.

Au-delà de l'instant t4, les machines électriques fournissent de nouveau du couple.

Grâce à l'utilisation de machines électriques réversibles 2, il est possible de réduire les temps de crabotage, sans avoir recours à un frein de boîte de vitesses.

Dans ce premier mode de mise en oeuvre de l'invention, l'arbre secondaire 13 peut être entraîné par la roue dentée secondaire Z8 par un deuxième système de couplage sélectif. De cette manière, il est possible de déconnecter le système de propulsion des roues du véhicule. Ce deuxième moyen de couplage sélectif peut être réalisé sous la forme d'un crabot ou d'un synchroniseur.

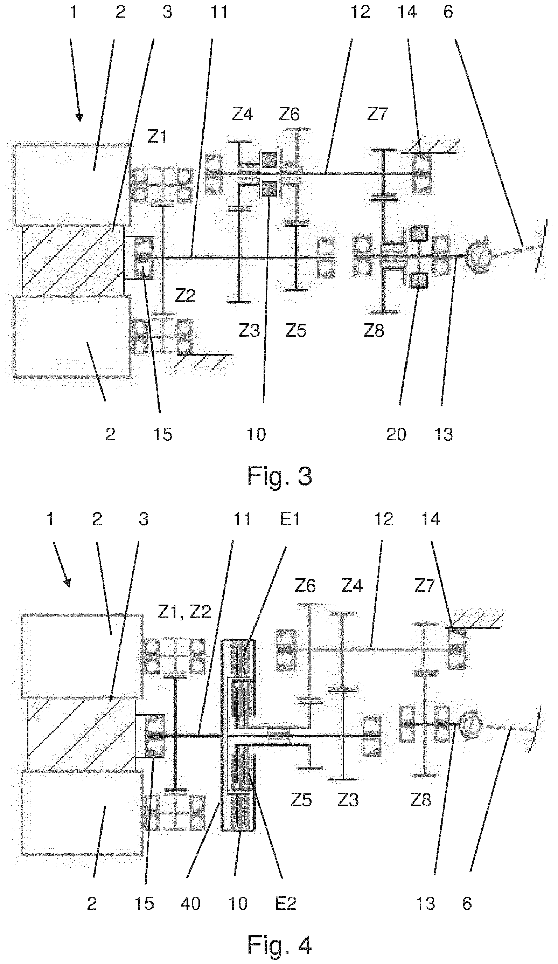

Sur la figure 3 est illustré un deuxième mode de mise en oeuvre de l'invention, qui diffère du précédent par l'emplacement du premier système de couplage sélectif 10 entre l'arbre intermédiaire 12 et les roues dentées intermédiaires Z4, Z6. Cette disposition présente l'avantage de pouvoir excentrer le système de couplage sélectif et de faciliter l'intégration de son dispositif de commande au sein du système de propulsion.

Le fonctionnement de ce deuxième mode de mise en oeuvre est similaire au premier mode de mise en oeuvre de l'invention étant donné que la structure du système de propulsion 1 est inchangée. La roue dentée commune 11 est toujours liée cinématiquement aux quatre arbres de sortie et reçoit le couple moteur C0 fourni par les quatre machines électriques, les quatre machines électriques étant réparties angulairement autour de la roue dentée commune de sorte à former un premier réducteur de vitesse Z1, Z2.

Lors des phases transitoires de changement à un rapport de réduction de vitesse inférieur ou supérieur, la synchronisation des vitesses de rotation des roues dentées intermédiaires Z4, Z6 et de l'arbre intermédiaire 12 se fait toujours par accélération ou ralentissement de la roue dentée commune 11 mais en prenant en compte le rapport de réduction de vitesse du premier couple d'engrenage ou du deuxième couple d'engrenage.

Dans ce deuxième mode de mise en oeuvre de l'invention, l'arbre secondaire 13 est entraîné par la roue dentée secondaire Z8 par un deuxième système de couplage sélectif 20. De cette manière, il est possible de déconnecter le système de propulsion des roues du véhicule. Ce deuxième moyen de couplage sélectif est réalisé sous la forme d'un crabot.

Le système de propulsion comprend également un organe de pilotage 50 des premier et deuxième systèmes de couplage sélectif 10, 20 lorsque ces deux systèmes de couplage son présents. L'organe de pilotage 50 est programmé pour que le système de propulsion puisse prendre les configurations suivantes :
- une configuration (i) selon laquelle l'arbre secondaire 13 reçoit le couple C1 transitant par le premier couple d'engrenage, le premier système de couplage sélectif 10 étant dans une première position de couplage et le deuxième système de couplage sélectif 20 étant en position de couplage,
- une configuration (ii) selon laquelle l'arbre secondaire 13 reçoit le couple C2 transitant par le deuxième couple d'engrenage, le premier système de couplage sélectif étant dans une deuxième position de couplage différente de la première position et le deuxième système de couplage sélectif étant en position de couplage, et
- une configuration (iii) de maintenance dans laquelle les premier et deuxième systèmes de couplage sont en position neutre de découplage.

La commande des systèmes de couplage effectuée par l'organe de pilotage 50 pour obtenir les configurations (i) à (iii) ci-dessus est donnée dans le tableau ci-dessous

| Configuration | Premier système de couplage 10 | Deuxième système de couplage 20 |
|---|---|---|
| (i) | Couplage selon une première position | Couplage |
| (ii) | Couplage selon une deuxième position | Couplage |
| (iii) | Découplage | Découplage |

La configuration (i) est par exemple adaptée à de faibles vitesses du véhicule et à une forte consigne de couple.

La configuration (ii) est par exemple adaptée à de fortes vitesses du véhicule et à une faible consigne de couple.

La configuration (iii) est par exemple adaptée à un fonctionnement en mode de maintenance pour lequel les roues du véhicule puissent tourner sans entraîner le système de propulsion.

Sur la figure 4 est illustré un troisième mode de mise en oeuvre de l'invention, qui diffère du premier mode de mise en oeuvre par un premier système de couplage sélectif 10 disposé entre la roue dentée commune et les roues dentées primaires réalisé sous la forme d'un double embrayage, notamment d'un double embrayage humide. Ce double embrayage humide 10 présente l'avantage de pouvoir s'affranchir de la synchronisation des vitesses de rotation de la roue dentée commune 11 et des roues dentées primaires Z3, Z5.

Le double embrayage humide 10 est d'une architecture de type radiale dans laquelle des premier et deuxième embrayages multidisques E1, E2 sont disposés radialement l'un au-dessus de l'autre. Plus précisément, dans cet exemple, le premier embrayage multidisques E1 est disposé radialement autour du deuxième embrayage multidisques E2. Un boitier de transmission de couple 40 commun aux premier et deuxième embrayages multidisques E1, E2 est solidaire en rotation de la roue dentée commune 11.

Le premier embrayage multidisques E1 est associé au premier couple d'engrenage Z3, Z4 tandis que le deuxième embrayage multidisques E2 est associé au deuxième couple d'engrenage Z5, Z6. La position neutre de découplage est obtenue en ouvrant simultanément les deux embrayages.

Avantageusement, le premier embrayage multidisques E1 disposé radialement autour du deuxième embrayage multidisques E2 est associé au premier ratio entre le couple moteur C0 et le couple C1 ayant transité par le premier couple d'engrenage Z3, Z4. Le deuxième embrayage multidisques E2 est associé au deuxième ratio entre le couple moteur C0 et le couple C2 ayant transité par le deuxième couple d'engrenage Z5, Z6.

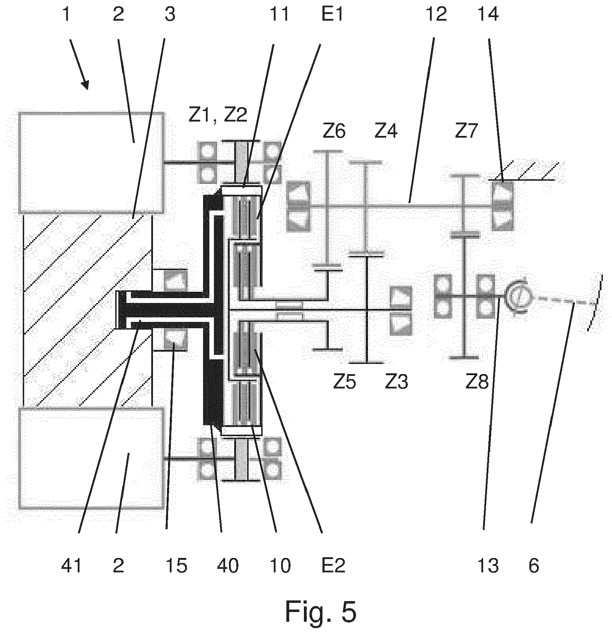

Sur la figure 5 est illustré un quatrième mode de mise en oeuvre de l'invention, qui diffère du troisième mode de mise en oeuvre par le fait que la roue dentée commune 11 entoure circonférentiellement le boitier de transmission de couple 40. Dans ce quatrième mode, le boitier de transmission de couple 40 commun aux premier et deuxième embrayages multidisques est solidaire en rotation de la roue dentée commune 11. Par exemple, la roue dentée commune 11 est rapportée sur le boitier de transmission de couple 40 ou usinée directement sur le boitier 40.

De manière avantageuse, le carter de transmission 3 supporte directement le boitier de transmission de couple 40 et alimente en fluide les premier et deuxième embrayages multidisques, notamment les chambres de commande des embrayages E1, E2. Des canaux d'alimentation 41 en fluide sous pression débouchant dans le carter de transmission 3 traversent le boiter de transmission de couple 40 et s'étendent axialement au travers du palier de guidage 15.

En variante, le double embrayage humide peut être d'une architecture de type axiale dans laquelle des premier et deuxième embrayages multidisques E1, E2 sont disposés axialement l'un à côté de l'autre et dans lequel un boitier de transmission de couple commun aux premier et deuxième embrayages multidisques est solidaire en rotation de la roue dentée commune. Dans cette variante, la roue dentée commune entoure circonférentiellement le boitier de transmission de couple.

L'invention n'est pas limitée aux exemples qui viennent d'être décrits.

## Revendications

1. Système de propulsion (1) pour véhicule électrique, comprenant :
- un ensemble de n machines électriques de propulsion (2), n étant un nombre entier supérieur ou égal à 3, chaque machine électrique comprenant un stator et un rotor présentant un arbre de sortie mobile en rotation autour d'un axe ;
- une roue dentée commune (11) liée cinématiquement aux n arbres de sortie et apte à recevoir le couple moteur C0 fourni par les n machines électriques (2), les n machines électriques étant réparties angulairement autour de la roue dentée commune de sorte à former un premier réducteur de vitesse (Z1, Z2),
le système de propulsion comprenant :
- des roues dentées primaires (Z3, Z5) aptes à être entraînées par la roue dentée commune (11),
- un arbre intermédiaire (12) apte à être entraîné par des roues dentées intermédiaires (Z4, Z6), chaque roue dentée primaire (Z3, Z5) étant liée cinématiquement à une roue dentée intermédiaire (Z4, Z6) correspondante de sorte à former un couple d'engrenage auquel est associé un deuxième réducteur de vitesse,
- un arbre secondaire (13) apte à entraîner un ensemble d'une ou plusieurs roues motrices du véhicule et présentant une roue dentée secondaire (Z8) liée cinématiquement à l'arbre intermédiaire (12) de sorte à former un troisième réducteur de vitesse.
dans lequel un premier système de couplage sélectif (10), disposé entre la roue dentée commune (11) et les roues dentées primaires ou alternativement entre l'arbre intermédiaire (12) et les roues dentées intermédiaire, sélectionne un premier couple d'engrenage ou un deuxième couple d'engrenage depuis une position neutre.

2. Système de propulsion selon la revendication 1, dans lequel l'arbre secondaire (13), à partir d'un couple moteur C0 transmis par les n machines électriques, est apte à recevoir sélectivement : un couple C1 ayant transité par le premier couple d'engrenage, ou un couple C2 ayant transité par le deuxième couple d'engrenage tel que C1 > C2.

3. Système de propulsion selon la revendication précédente, dans lequel le premier ratio entre le couple moteur C0 et le couple C1 ayant transité par le premier couple d'engrenage est compris entre 10 et 15, tel que 10 < C0/C1 < 15 et le deuxième ratio entre le couple moteur C0 et le couple C2 ayant transité par le deuxième couple d'engrenage est compris entre 5 et 10, tel que 5 < C0/C2 < 10.

4. Système de propulsion selon l'une des revendications 1 à 3, dans lequel les n machines électriques (2) sont réparties de manière régulière autour de l'axe de rotation (110) de la roue dentée commune selon un angle Δ égal à 360° / n.

5. Système de propulsion selon l'une des revendications 1 à 4, comprenant un carter de transmission (3) supportant les n machines électriques (2) et la roue dentée commune (11) à l'aide d'au moins un palier de guidage (15).

6. Système de propulsion selon l'une des revendications 1 à 5, dans lequel le carter de transmission (3) comprend un circuit de circulation de fluide (4) cheminant entre les n machines électriques (2) afin d'évacuer les calories émises lors de la transmission d'un couple.

7. Système de propulsion selon l'une des revendications 1 à 6, dans lequel l'axe de rotation (110) de la roue dentée commune (11), l'axe (120) de l'arbre intermédiaire (12) et l'axe (130) de l'arbre secondaire (13) sont parallèles.

8. Système de propulsion selon l'une des revendications 1 à 7, comprenant un arbre de transmission (6) équipé de cardans, reliant l'arbre secondaire (13) à un différentiel (7).

9. Système de propulsion selon l'une des revendications 1 à 8, dans lequel les n machines électriques (2) fournissent une même puissance nominale mécanique, cette puissance étant par exemple comprise entre 50kW et 150kW.

10. Système de propulsion selon l'une quelconque des revendications 1 à 9, dans lequel le premier système de couplage sélectif (10) disposé entre la roue dentée commune et les roues dentées primaires est réalisé sous la forme d'un crabot ou d'un synchroniseur.

11. Système de propulsion selon l'une des revendications 1 à 9, dans lequel le premier système de couplage sélectif (10) disposé entre la roue dentée commune (11) et les roues dentées primaires est réalisé sous la forme d'un double embrayage, notamment d'un double embrayage humide.

12. Système de propulsion selon l'une des revendications 1 à 11, dans lequel l'arbre secondaire (13) est entraînées par la roue dentée secondaire (Z8) par un deuxième système de couplage sélectif (20).

13. Système de propulsion selon la revendication précédente, dans lequel le deuxième moyen de couplage sélectif (20) est réalisé sous la forme d'un crabot ou d'un synchroniseur.

14. Système de propulsion selon la revendication 11, dans lequel le double embrayage humide est d'une architecture de type radiale dans laquelle des premier et deuxième embrayages multidisques (E1, E2) sont disposés radialement l'un au-dessus de l'autre, le double embrayage humide comprenant un boitier de transmission de couple (40) commun aux premier et deuxième embrayages multidisques et solidaire en rotation de la roue dentée commune (11).

15. Système de propulsion selon la revendication 1 combiné à la revendication 12, comprenant un organe de pilotage (50) des premier et deuxième systèmes de couplage sélectif (10, 20) de manière à ce que le système de propulsion (1) puisse prendre tout ou partie des configurations suivantes :
- une configuration (i) selon laquelle l'arbre secondaire (13) reçoit un couple C1 transitant par le premier couple d'engrenage, le premier système de couplage sélectif (10) étant dans une première position de couplage et le deuxième système de couplage sélectif (20) étant en position de couplage,
- une configuration (ii) selon laquelle l'arbre secondaire (13) reçoit un couple C2 transitant par le deuxième couple d'engrenage, le premier système de couplage sélectif (10) étant dans une deuxième position de couplage différente de la première position et le deuxième système de couplage sélectif (20) étant en position de couplage, et
- une configuration (iii) de maintenance dans laquelle les premier et deuxième systèmes de couplage (10, 20) sont en position neutre de découplage.
